Europäisches Patentamt

European Patent Office

Office européen des brevets

(11) Veröffentlichungsnummer: **0 374 409**
**A1**

## (12) EUROPÄISCHE PATENTANMELDUNG

(21) Anmeldenummer: 89119383.1

(22) Anmeldetag: 19.10.89

(51) Int. Cl.⁵: **B64D 1/04, B64D 7/08, F41F 3/065**

(30) Priorität: 22.12.88 DE 3843164

(43) Veröffentlichungstag der Anmeldung:
27.06.90 Patentblatt 90/26

(84) Benannte Vertragsstaaten:
FR GB IT SE

(71) Anmelder: **Messerschmitt-Bölkow-Blohm Gesellschaft mit beschränkter Haftung Robert-Koch-Strasse D-8012 Ottobrunn(DE)**

(72) Erfinder: **Hütter, Horst Schwaighofstrasse 22 D-8180 Tegernsee(DE)**

(54) **Streumuntionsbehälter.**

(57) Ein Streumunitionsbehälter 1 hat mehrere zum Transport und Ausstoß von Streumunition 8 dienende Ausstoßrohre 3 sowie Gasgeneratoren 5, 6, deren Druckgase zum Ausstoß der Streumunition quer zur Anflugrichtung zu beiden Seiten des Behälters 1 auf Treibkolben 9, 10 in den Ausstoßrohren 3 wirken. Zwischen zwei in jeweils einer gesonderten Ringkammer 13, 14 parallel zu den Ausstoßrohren 3 hintereinander angeordneten Gasgeneratoren 5, 6 sind absperrbare Überströmkanäle 21 und weitere Mittel vorhanden, durch die entweder gleichzeitig die Treibkolben 9, 10 der auf beiden Seiten des Behälters 1 mündenden Ausstoßrohre 3 durch die Treibgase von nur einem Gagenerator oder von beiden Gasgeneratoren beaufschlagbar sind, oder durch die zuerst die Treibgase von nur einem Gasgenerator 6 die Treibkolben 9, 10 der zu beiden Seiten des Behälters 1 mündenden Ausstoßrohre 3 und danach nach Anzündung des zweiten Gasgenerators 5 dessen Treibgase nur die Treibkolben 9 der zu einer Seite des Behälters 1 mündenden Ausstoßrohre 3 beaufschlagt sind.

FIG. 1

## Streumunitionsbehälter

Die Erfindung bezieht sich auf einen Streumunitionsbehälter gemäß dem Oberbegriff des Anspruchs 1.

Ein solcher Behälter ist durch die DE-PS 35 00 163 bekannt. Dort wird eine gleichmäßige Belegung der Zielfläche quer zur Bewegungsrichtung des Streubehälters durch unterschiedliche Ausstoßgeschwindigkeiten der Streumunition dadurch erreicht, daß die aus einem Gaserzeuger austretenden Treibgase nacheinander die einzelnen Anschlußrohrpaare beaufschlagen, wodurch infolge Druckabfalls die Ausstoßgeschwindigkeiten geringer werden. Mit dieser Vorrichtung ist nur eine symmetrische Verteilung der Munition beiderseits des Streumunitionsbehälters möglich. Wenn ein Ziel, wie es häufig vorkommt, nicht genau in der Mitte angeflogen wird, wird ein Teil der Munition seitlich über die Zielfläche hinaus abgeworfen und auf der gegenüberliegenden Seite wird die Zielfläche nicht mit der Munition voll abgedeckt.

Weiterhin ist durch die FR-PS 24 30 590 A1 ein Streumunitionsbehälter für Raketen bekannt, der die Raketen unsymmetrisch beiderseits der Flugachse ausstoßen kann, wobei dieses jedoch vom Ausstoßwinkel bezüglich der Flugachse abhängig ist. Dieses erfordert einen erheblichen Aufwand an Steuerungsmittel zur Wahl des jeweiligen Ausstoßwinkels.

Die Erfindung wählt einen anderen Weg zum Erzielen einer unsymmetrischen Verteilung von Submunition beiderseits der Flugachse. Ausgehend von einem Streumunitionsbehälter der eingangs genannten Art liegt der Erfindung die Aufgabe zugrunde, diesen so auszubilden, daß auch bei gleichgerichtetem Ausstoß der Streumunition nach beiden Seiten nach Bedarf eine unsymmetrische Verteilung der Streumunition beiderseits der Flugachse erzielt wird.

Diese Aufgabe wird durch die im Anspruch 1 gekennzeichneten Merkmale gelöst. Vorteilhafte Weiterbildungen der Erfindung sind in den Unteransprüchen gekennzeichnet.

Der wesentliche Vorteil der Erfindung besteht in der wahlweisen Möglichkeit, die Submunition entweder nach beiden Seiten mit gleicher Geschwindigkeit oder aber bei einem außermittigen Anflug nach einer Seite mit größerer und nach der anderen Seite mit kleinerer Geschwindigkeit auszustoßen. Dabei kann beim Ausstoß mit gleicher Geschwindigkeit die Ausstoßgeschwindigkeit und somit die Ausstoßweite noch dadurch gewählt werden, ob nur ein oder beide Gasgeneratoren angezündet werden. Beim Hintereinanderschalten von mehreren Submunitionsbehältern, die verschieden starke Gasgeneratoren haben, oder beim Anschluß von mehreren Ausstoßrohren an einem Gasgenerator können wahlweise größere und kleinere Ausstoßgeschwindigkeiten und somit eine vollständige Abdeckung der Zielfläche mit Submunition erzielt werden.

Die Erfindung wird nachstehend anhand eines in der Zeichnung dargestellten Ausführungsbeispieles erläutert. Es zeigen

Fig. 1 einen Streumunitionsbehälter im Schnitt entsprechend den Linien I-I der Fig. 2;

Fig. 2 einen Teilschnitt durch die Mitte des Streumunitionsbehälters nach Fig. 1;

Fig. 3 einen Teilschnitt entsprechend den Linien III-III der Fig. 2;

Fig. 4 einen Teilschnitt entsprechend Fig. 3, bei dem der linke Gasgenerator angezündet ist;

Fig. 5 einen Teilschnitt entsprechend den Linien V-V der Fig. 2 nach Anzündung des linken Gasgenerators;

Fig. 6 einen Teilschnitt entsprechend Fig. 3, bei dem zusätzlich der rechte Gasgenerator angezündet ist;

Fig. 7 ein Flugzeug mit angehängtem Streumunitionsbehälter bei einem außermittigem Anflug auf eine Zielfläche mit asymmetrischer Verteilung von Submunition;

Fig. 8 der Druckverlauf in den Gasgenerator-Kammern bei asymmetrischen Ausstoß der Submunition und

Fig. 9 der Druckverlauf in den Gasgenerator-Kammern bei symmetrischen Ausstoß der Submunition.

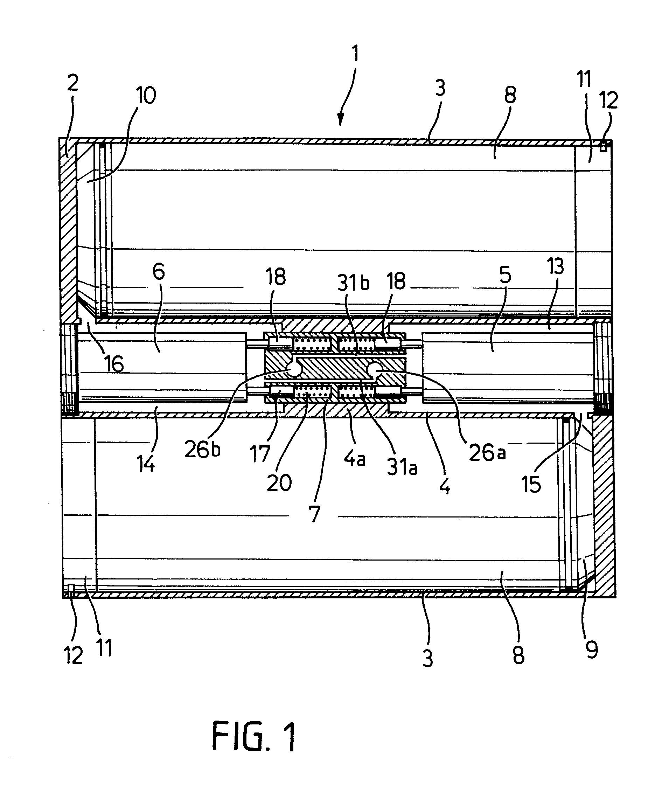

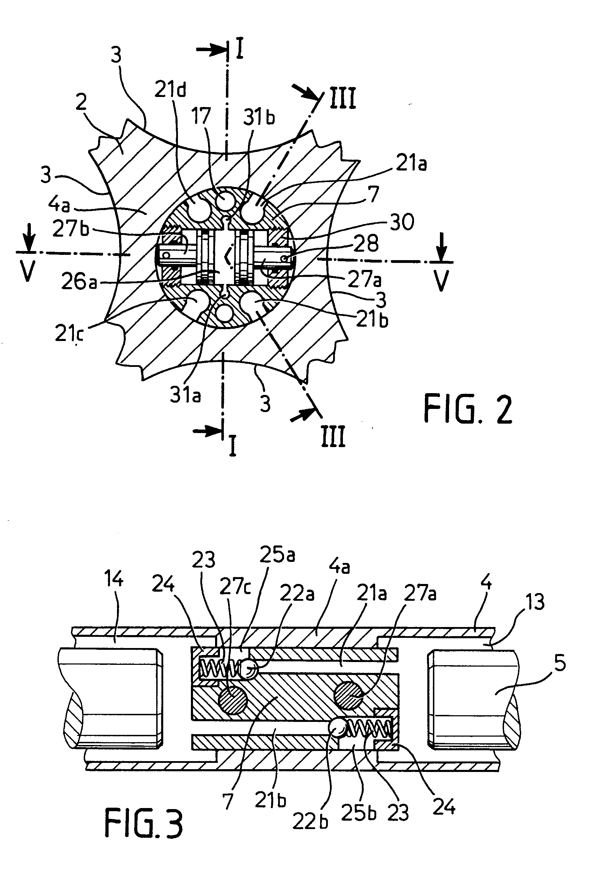

Ein Streumunitionsbehälter 1, entsprechend Fig. 1 und 2, umfaßt einen Behälter 2 mit vier Ausstoßrohren 3 und einem zentralen Innenrohr 4, in dem zwischen zwei Gasgeneratoren 5 und 6 ein Schieber 7 eingesetzt ist. Die Ausstoßrohre 3 enthalten nicht näher dargestellte Submunitionskörper 8, die durch auf Treibkolben 9 und 10 wirkende Gase der Gasgeneratoren 5 und 6 nach Herausstoßen eines Deckels 11 in jeweils entgegengesetzter Richtung ausgestoßen werden können. Die Deckel 11 sind durch Scherstifte 12 bei der Handhabung der Behälter 1 gesichert. In der Fig. 2 sind vier Ausstoßrohre 3 dargestellt, es können auch je nach Bauart des Behälters 1 zwei, sechs oder jede andere gerade Anzahl von Ausstoßrohren vorhanden sein. Die Gasgeneratoren 5 und 6 sind innerhalb des Innenrohres 4 von Ringkammern 13 und 14 umgeben, die über Überströmkanäle 15 und 16 mit den Treibkolben 9 und 10 verbunden sind.

Der Schieber 7 ist in einem Ringabschnitt mit größerer Wandstärke 4a des Innenrohres 4 geführt und wird durch einerseits in die Gasgeneratoren 5 und 6 und andererseits in zwei Bohrungen 17 eingesetzte Zentrierbolzen 18 in einer Mittellage durch Federn 20 gehalten. Unter Hinzuziehung der Fig. 3 ist ersichtlich, daß in dem Schieber 7 vier Überströmkanäle 21a, 21b, 21c und 21d vorhanden sind. In Fig. 3 ist dargestellt, daß der Kanal 21a freien Zugang zur Ringkammer 13 hat, zur Ringkammer 14 jedoch durch ein Rückschlagventil 22a mit Feder 23 und Buchse 24 abgeschlossen ist. Entsprechend ist der Kanal 21b zur Ringkammer 14 geöffnet und zur Ringkammer 13 durch ein Rückschlagventil 22b, Feder 23 und Buchse 24 abgeschlossen. Beide Kanäle 21a und 21b sind mit senkrecht zu ihrer Mittelachse angeordneten Seitenöffnungen 25a und 25b versehen. In den Schieber 7 sind weiterhin in zwei Querbohrungen 26a und 26b je zwei Arretierbolzen 27a, 27b, 27c und 27d eingesetzt, von denen in Fig. 2 die Arretierbolzen 27a und 27b in Ansicht und in Fig. 3 diejenigen 27a und 27c im Schnitt dargestellt sind. Die Arretierbolzen 27 sind jeweils durch Scherstifte 28 gesichert und durch Anschlagbuchsen 30 in ihrer Bewegung begrenzt. Zu den Querbohrungen 26a und 26b führen jeweils wechselseitig von den Ringkammern 13 und 14 Druckbohrungen 31a und 31b (siehe auch Fig. 5).

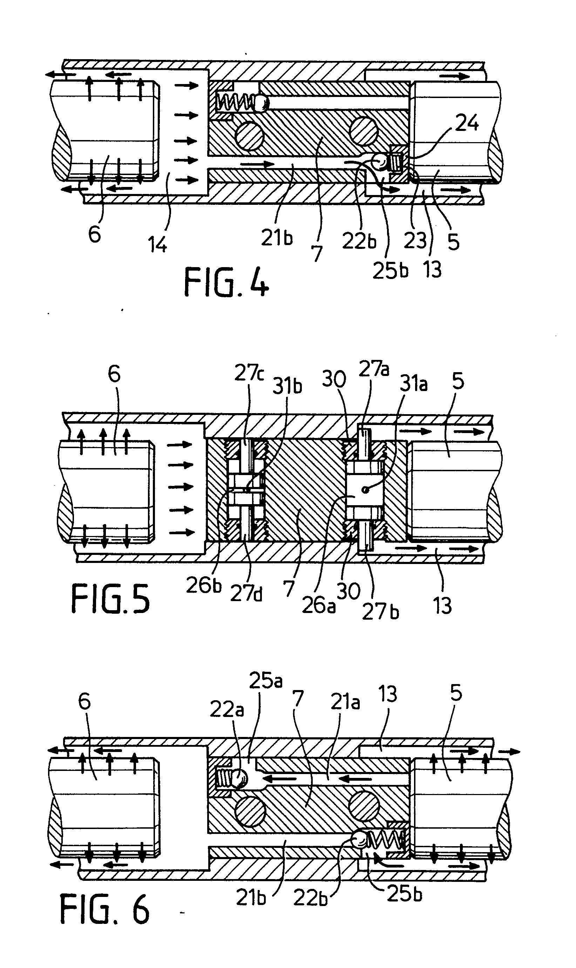

In den Fig. 4 und 5 ist die Wirkung der Treibgase auf den Schieber 7 dargestellt, wenn nur der Gasgenerator 6 angezündet ist. Wie aus der Fig. 4 mit dem die Treibgase darstellenden Pfeilen ersichtlich ist, wird der Schieber 7 nach rechts gegen den Gasgenerator 5 gedrückt und das Rückschlagventil 22b gegen die Buchse 24 unter Zusammendrückung der Feder 23 geschoben, wodurch die Seitenöffnung 25b mit der Ringkammer 13 verbunden wird. Die Treibgase können somit sowohl über die Ringkammer 14 und den Überströmkanal 16 den Treibkolben 10 als auch über die Ringkammer 13 und den Überströmkanal 15 den Treibkolben 9 beaufschlagen. Gleichtig strömen entsprechend Fig. 5 die Treibgase durch den Druckkanal 31a, treten in die Querbohrung 26a ein und treiben, nachdem die Scherstifte 28 gebrochen sind, die Arretierbolzen 27a und 27b in die Ringkammer 13 bis zum Anschlag an die Buchsen 30. Dadurch wird verhindert, daß der Schieber 7 wieder in seine Ausgangslage zurückgedrückt wird.

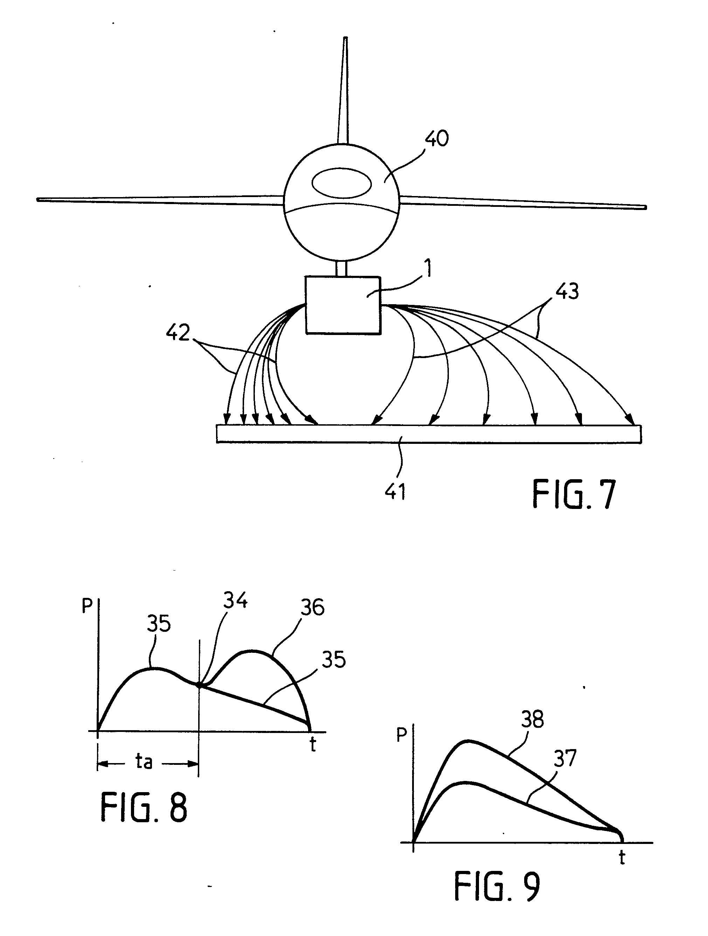

Die Anzündung nur des Gasgenerators 6 entsprechend den Fig. 4 und 5 kommt in Betracht, wenn die Submunitionskörper 8 mit nur geringer Geschwindigkeit aus den Ausstoßrohren 3 ausgestoßen werden sollen oder wenn, wie in Fig. 7 dargestellt ist, bei einem außermittigen Zielanflug nur die in Flugrichtung rechten Submunitionskörper 8 mit geringer Geschwindigkeit ausgetrieben werden sollen. In diesem Fall ist es erforderlich, die entgegengesetzt gerichteten Submunitionskörper 8 mit größerer Geschwindigkeit auszustoßen. Dabei wird entsprechend Fig. 6 kurze Zeit nach dem Anzünden des Gasgenerators 6 auch der Gasgenerator 5 angezündet. Der dadurch in der Ringkammer 13 entsprechende höhere Gasdruck treibt durch die Seitenöffnung 25b das Rückschlagventil 22b gegen den Überströmkanal 21b und schließt diesen ab. Weiterhin werden auch Treibgase durch den Überströmkanal 21a geleitet und drücken das Rückschlagventil 22a in die gezeigte Stellung. Dieses bleibt jedoch ohne Wirkung, weil die Seitenöffnung 25a abgesperrt ist.

In der Fig. 7 ist ein Flugzeug 40 in der Flugrichtung aus der Blattebene heraus dargestellt, an dem der Submunitionsbehälter 1 angebracht ist. Das Flugzeug 40 macht den bereits geschilderten außermittigen Anflug auf eine Zielfläche 41. Die Kurven 42 stellen den Flugverlauf der mit geringer Geschwindigkeit über die Ringkammer 14 und die Kurven 43 den Flugverlauf der mit großer Geschwindigkeit über die Ringkammer 13 ausgestoßenen Submunitionskörper 8 dar.

Die Fig. 8 stellt für die in den Fig. 4 bis 6 dargestellten Treibgaswirkungen und für die in Fig. 7 wiedergegebenen Geschwindigkeitskurven die Druckverläufe P über die Zeit t in den Ringkammern 13 und 14 als Diagramm dar. Bei Anzündung nur des Gasgenerators 6 ergibt sich in der Zeit $t_a$ bis zum Punkt 34 ein gleicher Druckverlauf 35 in den Kammern 13 und 14. Ab Punkt 34 steigt nach Anzündung des Gasgenerators 5 der Druck in der Kammer 13 entsprechend der Kurve 36 noch einmal stark an, wobei die Submunitionskörper 8 in der in Flugrichtung linken Seite des Behälters 1 entsprechend den Kurven 43 mit größerer Geschwindigkeit ausgestoßen werden. Die in Flugrichtung rechten Munitionskörper 8 werden mit dem Druck 35 entsprechend den Kurven 42 mit geringer Geschwindigkeit ausgestoßen.

In den Druckdiagrammen der Fig. 9 zeigen die Kurven 37 und 38 Druckverläufe in beiden Ringkammern 13 und 14 bei gleichen Ausstoßgeschwindigkeiten der Munitionskörper 8 nach beiden Seiten. Dabei stellt die Kurve 37 den Druckverlauf bei Anzündung nur eines Gasgenerators und die Kurve 38 den Druckverlauf bei gleichzeitiger Anzündung beider Gasgeneratoren 5 und 6 dar.

**Ansprüche**

1. Streumunitionsbehälter, der mehrere zum Transport und Ausstoß von Streumunition dienende Ausstoßrohre sowie Gasgeneratoren aufweist, deren Druckgase zum Ausstoß der Streumunition quer zur Flugrichtung zu beiden Seiten des Behälters auf Treibkolben in den Ausstoßrohren wirken, wobei Mittel zur Verteilung der Druckgase auf die einzelnen Treibkolben vorgesehen sind, **dadurch gekennzeichnet,** daß in einem zwischen den Ausstoßrohren (3) parallel zu diesen angeordneten Innenrohr (4) zwei Gasgeneratoren (5, 6) in Ringkammern (13, 14) vorhanden sind und zwischen den Gasgeneratoren ein Schieber (7) mit Überströmkanälen (21) angeordnet ist, die jeweils an einem Ende in eine der beiden Ringkammern münden und an dem anderen Ende vor der Einmündung in die andere Ringkammer mit einem Rückschlagventil (22) versehen sind, wobei in der mittleren Ruhelage des Schiebers die Überströmkanäle verschlossen sind und bei gleichzeitiger Zündung beider Gasgeneratoren der Schieber in dieser Stellung verbleibt, bei Zündung nur eines Gasgenerators oder zeitlich versetzter Zündung beider Gasgeneratoren der Schieber verschoben wird, dabei einen Überströmkanal freigibt und in dieser Stellung arretiert wird.

2. Streumunition nach Anspruch 1, **dadurch gekennzeichnet,** daß der Schieber (7) in einem zentralen Ringabschnitt mit größerer Wandstärke (4a) des Innenrohres (4) geführt ist, somit einen geringeren Durchmesser als die Ringkammern (13,14) aufweist, und daß an den gegenüberliegenden Enden der Überströmkanäle (21) senkrecht zur Mittelachse des Schiebers (7) angeordnete Seitenöffnungen (25) vorhanden sind.

3. Streumunitionsbehälter nach Anspruch 1, **dadurch gekennzeichnet,** daß die Ringkammern (13, 14) einen größeren Durchmesser als die Gasgeneratoren (5; 6) aufweisen und an ihren äußeren Enden Auslaßkanäle (15, 16) zu den Treibkolben (9, 10) haben.

4. Streumunitionsbehälter nach den Ansprüchen 1 bis 3, **dadurch gekennzeichnet,** daß in Querbohrungen (26) des Schiebers (7), die in der Nähe seiner Enden angeordnet sind, jeweils zwei einander gegenüberliegende durch einen Scherstift (28) in ihrer Lage gesicherte Arretierbolzen (27) eingesetzt sind, zwischen deren innenliegenden Köpfen Hohlräume vorhanden sind, die jeweils durch einen Druckkanal (31) mit der am gegenüberliegenden Ende des Schiebers (7) befindlichen Ringkammer (13, 14) verbunden sind.

5. Streumunitionsbehälter nach einem oder mehreren der Ansprüche 1 bis 4, **dadurch gekennzeichnet,** daß die Gasgeneratoren (5, 6) durch in Schieberbohrungen (17) eingesetzte Zentrierbolzen (18) in ihrer Lage gehalten sind, wobei zwischen den Köpfen der Zentrierbolzen und den Bohrungsenden Federn (20) angeordnet sind, die den Schieber (7) in seiner mittigen Ruhelage zentrieren.

FIG. 1

10621

FIG. 2

FIG.3

10621

FIG. 4

FIG. 5

FIG. 6

40

1

43

42

41

FIG. 7

P

35

34

36

35

ta

FIG. 8

P

38

37

t

FIG. 9

10 621

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | DE - A1 - 3 127 674 <br> (RHEINMETALL GMBH) <br> * Seite 10, Zeile 24 - Seite 11, Zeile 19; Seite 13, Zeilen 1-17; Seite 15, Zeilen 1-8; Fig. 1-5,14a,24 * <br> -- | 1 | B 64 D 1/04 <br> B 64 D 7/08 <br> F 41 F 3/065 |
| A | US - A - 4 750 403 <br> (HUBER, JR. et al.) <br> * Gesamt * <br> -- | 1 | |
| A | US - A - 4 625 646 <br> (GEORGE T. PINSON) <br> * Gesamt * <br> -- | 1 | |
| A | US - A - 3 726 223 <br> (RICHARD M. MOE) <br> * Gesamt * <br> -- | | |
| D,A | DE - C1 - 3 500 163 <br> (MESSERSCHMITT-BÖLKOW-BLOHM GMBH) <br> * Gesamt * <br> -- | 1 | |
| D,A | DE - A1 - 2 829 451 <br> (MESSERSCHMITT-BÖLKOW-BLOHM GMBH) <br> * Gesamt * <br> ---- | 1 | |

RECHERCHIERTE SACHGEBIETE (Int. Cl⁵)

B 64 D   1/00
B 64 D   7/00
F 41 F   3/00
F 41 F   5/00
F 42 B  12/00

Der vorliegende Recherchenbericht wurde für alle Patentansprüche erstellt.

| Recherchenort | Abschlußdatum der Recherche | Prüfer |
|---|---|---|
| WIEN | 20-03-1990 | KALANDRA |